# EUROPEAN PATENT APPLICATION

(11) **EP 2 080 991 A1**
(43) Date of publication of application: **22.07.2009**
(21) Application number: 07830977.0
(22) Date of filing: 31.10.2007
(51) Int. Cl.: G01D 5/18, G01B 7/30, H01L 43/06, H01L 43/08

(54) **ROTATION ANGLE DETECTION DEVICE**

(30) Priority: 31.10.2006 JP 2006295269
(71) Applicant: The Furukawa Electric Co., Ltd., Chiyoda-ku Tokyo 100-8322 (JP)
(72) Inventor: IIJIMA, Takashi, Tokyo 1008322 (JP); IIZUKA, Shinichiro, Tokyo 1008322 (JP)
(74) Representative: Reinhard - Skuhra - Weise & Partner GbR
(86) International application number: PCT/JP2007/071243
(87) International publication number: WO 2008/053928

(57) **Abstract**

A rotation angle detection device comprises a rotor (120) attached to a measurable rotation body (Sh) for rotating with the measurable rotation body to be measured a rotation angle, and comprising a magnet (110) that a magnetic flux density around the measurable rotation body is changed thereby in response to the rotation angle of the measurable rotation body; a stator (130) to be attached as independent of the rotation of the measurable rotation body; a detection element ((150) (151-154)) fixed on the stator for detecting a change in magnetic flux densitydue to the magnet in response to the rotation of the measurable rotation body; and a case for packing the rotor, the stator and the detection element. By detecting the rotation angle of the measurable rotation body in response to a detection signal from the detection element according to the rotation of the measurable rotation body, it becomes able to provide a rotation angle detection device comprising less number of components, to be small sized, to be easily assembled, and having excellent detection characteristics.

## Description

### Technical field

The present invention relates to a rotation angle detection device to be attached to a rotation body and to be used for detecting a rotation angle of such the rotation body.

### Background art

For example, there is used a so-called rotation angle detection device in a case of detecting a rotation angle of a steering wheel as integral with a shaft to rotate, such as a steering shaft of an automobile or the like, by attaching to such the shaft (for example, refer to a patent document 1). Here, a configuration of a conventional rotation angle detection device 5 will be described in detail below, based on the drawings.

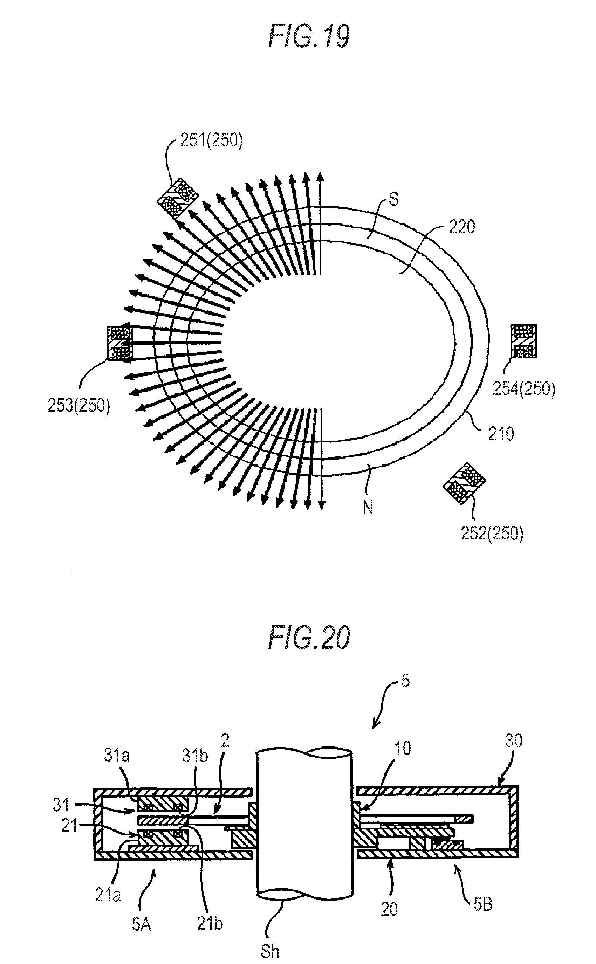

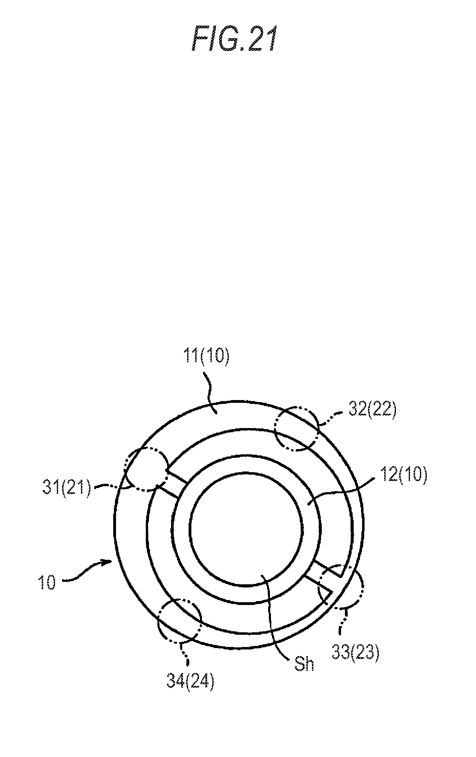

The conventional rotation angle detection device 5 comprises a rotation angle sensor 5A and a rotation number sensor 5B as shown in FIG. 20 and FIG. 21. Moreover, the rotation angle sensor 5A comprises a rotor 10 and a stator 20 as shown in FIG. 20, wherein the rotor 10 rotates asintegral with a steering shaft Sh, meanwhile, the stator 20 is fixed on a combination switch bracket as not shown in the figure, via a case 30. Further, the case 30 is made from a metal having a shielding property for an alternating magnetic field, such as from an aluminum, a copper, or the like.

Still further, the rotor 10 is comprised of a rotor sensing unit 11 of ring shape and a rotor fixing unit 12 of stepped column shape as shown in FIG. 21. Still further, the rotor fixing unit 12 is made from a resin, wherein a diameter reduction portion thereof is engaged with a serration (not shown in FIG. 21) of the steering shaft Sh and then to be rotated as integral with a rotation of such the shaft Sh. Furthermore, the rotor sensing unit 11 is comprised of a ring member of variable width in a circumferential direction made from an electrically conductive member. Here, the rotor sensing unit 11 is manufactured by press working a metal having the electrical conductivity, such as the aluminum, the copper, a silver, a brass, or the like.

While, four of fixed cores 21 to 24 are fixed with an equal interval in a circumferential direction of the rotor sensing unit 11 at a surface side of an inner sidewall of the stator 20 as shown in FIG. 20 and FIG. 21. Moreover, four of the individual fixed cores 21 to 24 is comprised of a core main body (only a core main body 21a is shown in FIG. 20) comprised of an insulating magnetic material, and is comprised of an exciting coil (only an exciting coil 21b is shown in FIG. 20) maintained in the individual core main bodies inside, respectively.

Moreover, fixed cores 31 to 34 (only the fixed core 31 is shown in FIG. 20) are attached at a surface side of an inner sidewall of the case 30 respectively, as sandwiching the rotor sensing unit 11 thereby with a predetermined distance at positions facing to the fixed cores 21 to 24 at the stator side respectively. Moreover, the individual fixed cores 31 to 34 at the case side is comprised of a core main body (only a core main body 31a is shown in FIG. 20) comprised of an insulating magnetic material, and is comprised of an exciting coil (only an exciting coil 31b is shown in FIG. 20) maintained in the individual core main bodies inside, respectively, as similar to the case of the fixed cores 21 to 24 at the stator side. Further, individual pairs of the fixed cores 31 to 34 at the case side and of the fixed cores 21 to 24 at the stator side is maintained using a coil core holder as not shown in the figure, and then such the coil core holder is fixed on a printed circuit board in the case inside. Thus, the individual pairs of the fixed cores sandwiches the rotor sensing unit 11 with the predetermined distance under the state of facing thereto respectively.

Here, the individual fixed cores 21 to 24 and 31 to 34 facing to each other with the predetermined distance is manufactured as a special order item for a rotation angle detection device. Moreover, the core main body is made from a soft magnetic material of insulating, such as a plastic magnet (for example, a mixed soft magnetic material in which an Mn-Zn based soft magnetic ferrite is mixed into a polyphenylene sulfide (PPS) or the like). Further, the exciting coils packed into the core main body inside with facing to each other are connected in series to therebetween respectively, and then electrically connected to the printed circuit board. Still further, the exciting coil forms an alternating magnetic field at a surrounding thereof by being flowed an alternating exciting current, and then a magnetic circuit is to be formed thereby at between the individual fixed cores to be paired respectively.

Furthermore, by rotating the rotor sensing unit 11 to be integral with the rotor 10, an incidence rate of an eddy current occurred due to the alternating magnetic field of such the exciting coils is to be converted into a variation in inductance of the coil via a measurement device and to be detected such the value, and then it is to be converted into a rotation angle of the rotor 10, that is to say, that of the shaft Sh.
[Patent Document 1] Japanese Patent Application Publication No. 2004-226382 (claims 4 and 5, FIG. 1)

### Disclosure of the invention

### Problems to be solved by the invention

In the case of the rotation angle detection device 5 comprising the above mentioned configuration, it is required to arrange individual pairs of exciting coils and a core main body for having an equal interval therebetween on a printed circuit board under a state that the exciting coils and the core main body as the special order items for the rotation angle detection device are fixed to the coil core holder for the rotation angle detection device as well. Hence, man-hour for assembly and the number of components therefor become increased, and then a manufacturing cost becomes expensive.

Moreover, a thickness of the rotation angle detection device 5 in a rotor axis line direction becomes thick, and then a size of the rotation angle detection device as itself cannot help but become enlarged, because the individual pairs of the exciting coils and the core main body are arranged on the printed circuit board for facing to the rotor sensing unit 11. Further, a special wiring process is required because the exciting coils and the core main body as special order items are attached to the printed circuit board inside the case via the coil core holder, and then a work efficiency of an assembly therefor becomes worse.

Still further, it is required to allow a certain degree of a component tolerance or a high degree of an assembly tolerance between the components after assembling, for designing to improve an assembly easiness of the rotation angle detection device 5 comprising such the complicated configuration. And then it becomes required to arrange the exciting coils as the one pair and the core main body for sandwiching the rotor sensing unit 11, for absorbing a shift of an output due to a backlash caused by such the reasons. Furthermore, it becomes required to use a coil core holder as not commercially available but special order item for arranging the exciting coils as the one pair and the coil core at special positions for sandwiching the sensing unit. As a result, the manufacturing cost becomes expensive, and it becomes hard to achieve a rotation angle detection device to be small sized, because a thickness of the rotation angle detection device itself becomes thick for the thickness of the coil core holder.

From a view point of each of the above mentioned views, in so far as following a basic structure of the conventional rotation angle detection device 5, it remains a drag on realizing a rotation angle detection device comprising less number of components, to be small sized, to be easily assembled, and having excellent detection characteristics.

An object of the present invention is to provide a rotation angle detection device comprising less number of components, to be small sized, to be easily assembled, and having excellent detection characteristics.

### Means for solving the problem

For solving the above described problems, a rotation angle detection device according to the present invention is **characterized in that** the rotation angle detection device comprises:
a rotor attached to a measurable rotation body for rotating with the measurable rotation body to be measured a rotation angle, and comprising a magnet that a magnetic flux density around the measurable rotation body is changed thereby in response to the rotation angle of the measurable rotation body;
a stator to be attached as independent of the rotation of the measurable rotation body;
a detection element fixed on the stator for detecting a change in magnetic flux density due to the magnet in response to the rotation of the measurable rotation body; and
a case for packing the rotor, the stator and the detection element,
wherein the rotation angle of the measurable rotation body is detected in response to a detection signal from the detection element according to the rotation of the measurable rotation body.

According to the conventional rotation angle detection device comprised of the combination of the sensing unit and the coil, it becomes to bring on a high cost of production therefor, because the coil, the coil core, the coil core holder and the rotor shield are included as the component parts thereof and such the component parts are special order items, and then because a complicated coil wiring processing becomes required due to too many number of components. Moreover, it becomes hard to design the thickness of the rotation angle detection device to be thin and the rotation angle detection device itself to be small sized, because it is required to arrange the coil and the coil core via the coil core holder for the rotor shield to be sandwiched by the coil and the coil core with a predetermined distance therebetween.

However, according to the rotation angle detection device regarding the present invention, it becomes able to use a detection element comprised of a small sized coil to be commercially supplied as a so-called chip inductor, because a change in magnetic flux density due to the magnet to be rotated with the rotor becomes detected, and then it becomes possible for a rotation angle detection device itself to be small sized. Moreover, it becomes unnecessary to perform the wiring processing, and then it becomes able to achieve a lower cost therefor, because it is able to surface mount the commercially supplied coil as the detection element which is the so-called chip inductor onto such as a stator comprised of a printed circuit board. Further, it is not required to use a coil core holder as that for the conventional rotation angle detection device, because it is not necessary to arrange the coils for sandwiching the rotor shield. Thus, it is able to manufacture a rotation angle detection device to be thinner for such the thickness thereof, and then it becomes possible for the rotation angle detection device itself to be small sized.

Moreover, a rotation angle detection device according to the claim 2 regarding the present invention is **characterized in that** the rotation angle detection device according to claim 1, wherein the magnet has an annular shape to surround the measurable rotation body, a half portion of one side in a circumferential direction of the magnet of annular shape is a north pole, and a half portion of another side in the circumferential direction is a south pole.

It becomes able to detect reliably a change in magnetic flux density according to a rotation of the measurable rotation body using the detection element, by using the magnet comprising such the configuration, and it becomes able to enhance a measurement accuracy regarding a rotation angle of the measurable rotation body.

Moreover, a rotation angle detection device according to the claim 3 regarding the present invention is **characterized in that** the rotation angle detection device according to claim 1, wherein the magnet has an ellipsoidal annular shape, an inner side of the magnet is a north pole and an outer side is a south pole, or the inner side is the south pole and the outer side is the north pole.

By using the magnet comprising such the configuration as well, it becomes able to detect reliably the change in magnetic flux density according to the rotation of the measurable rotation body using the detection element, and it becomes able to enhance the measurement accuracy regarding the rotation angle of the measurable rotation body.

Moreover, a rotation angle detection device according to the claim 4 regarding the present invention is **characterized in that** the rotation angle detection device according to claim 1, wherein the magnet has an ellipsoidal annular shape, a half portion in a thickness direction of the magnet is a north pole and another half portion thereof is a south pole.

By using the magnet comprising such the configuration as well, it becomes able to detect reliably the change in magnetic flux density according to the rotation of the measurable rotation body using the detection element, and it becomes able to enhance the measurement accuracy regarding the rotation angle of the measurable rotation body.

Moreover, a rotation angle detection device according to the claim 5 regarding the present invention is **characterized in that** the rotation angle detection device according to any one of claims 1 to 4, wherein the detection element comprises the detection elements of one pair having a same detection characteristics, and the detection elements of the one pair are arranged at the stator so as to be symmetrical therebetween with respect to a central axis line of the measurable rotation body.

By arranging the detection elements of the one pair at such the positions of the stator, it becomes able to compensate and then absorb a shift of a signal output from the detection element due to a backlash occurs according to a component tolerance or an assembly of a rotation angle detection device, and it becomes able to realize a rotation angle detection with a high accuracy.

Moreover, a rotation angle detection device according to the claim 6 regarding the present invention is **characterized in that** the rotation angle detection device according to claim 5, wherein the pair of detection elements is arranged as not less than two pairs at different positions in the circumferential direction relative to the axis line of the measurable rotation body.

By providing the pair of the detection elements as such the two pairs for designing to stabilize output characteristics for the backlash of the rotation angle detection device itself, it becomes able to measure the rotation angle of the measurable rotation body over 360 degrees without being affected by the backlash of the rotation angle detection device.

### Brief description of the drawings

FIG. 1 is a plan view showing an internal configuration of a rotation angle detection device according to the first embodiment regarding the present invention.
FIG. 2 is a brief plan view showing with ease to follow a basic structure of a part of the rotation angle detection device as shown in FIG. 1.
FIG. 3 is an explanatory diagram illustrating a magnetic flux in a state where a borderline between a north pole and a south pole of a magnet is the most close to another inductor regarding the rotation angle detection device as shown in FIG. 1.
FIG. 4 is an explanatory diagram illustrating a state of the magnetic flux in a case of rotating a rotor slightly in a counterclockwise direction (approximately 30 degrees) from the state as shown in FIG. 3.
FIG. 5 is an explanatory diagram illustrating the magnetic flux in a state where the borderline between the north pole and the south pole of the magnet has an angle of approximately 45 degrees for another pair of the inductors by further rotating the rotor slightly in a counterclockwise direction from the state as shown in FIG. 4.
FIG. 6 is an explanatory diagram illustrating the magnetic flux in a state where the borderline between the north pole and the south pole of the magnet has an angle of approximately 60 degrees for the other pair of the inductors by further rotating the rotor in a counterclockwise direction from the state as shown in FIG. 5.
FIG. 7 is an explanatory diagram illustrating the magnetic flux in a state where the borderline between the north pole and the south pole of the magnet has an angle of approximately 90 degrees for the other pair of the inductors by further rotating the rotor in a counterclockwise direction from the state as shown in FIG. 6.
FIG. 8 is a view showing output characteristics for individual pairs of inductors in the rotation angle detection device as shown in FIG. 1 and FIG. 13, and an output characteristic diagram showing an inductance output values A and B of the individual pairs of the inductors with a vertical axis corresponding to a rotation angle of a rotor with a horizontal axis.
FIG. 9 is an output characteristic diagram showing an output to be performed an operation processing of tan⁻¹ (A/B), and to be superimposed on the output characteristic diagram as shown in FIG. 8.
FIG. 10 is an explanatory diagram schematically showing a magnet provided in a pinion and a position of an inductor arranged at a circumference thereof.
FIG. 11 is an output characteristic diagram showing an inductance of the individual inductors as shown in FIG. 10, as an inductance output value of the individual pairs of the inductors with a vertical axis corresponding to a rotation angle of a pinion with a horizontal axis.
FIG. 12 is an output characteristic diagram showing an output, which is performed an operation processing of tan⁻¹(C/D) using an inductance output difference C between inductors as one pair and an inductance output difference D between inductors as another pair, and is superimposed on the output characteristic diagram as shown in FIG. 11, as an inductance output value of the individual pairs of the inductors with a vertical axis corresponding to a rotation angle of a pinion with a horizontal axis.
FIG. 13 is a plan view showing an internal configuration of a rotation angle detection device according to the second embodiment regarding the present invention.
FIG. 14 is a brief plan view showing with ease to follow a basic structure of a part of the rotation angle detection device as shown in FIG. 13.
FIG. 15 is a view illustrating a magnetic flux density around the magnet in the rotation angle detection device as shown in FIG. 13, and an explanatory diagram illustrating the magnetic flux in a state where a major axis of the magnet is positioned in a vertical direction in the figure.
FIG. 16 is an explanatory diagram illustrating a magnetic flux with individual inductors in a state of rotating a rotor in a counterclockwise direction with approximately 30 degrees from the state as shown in FIG. 15.
FIG. 17 is an explanatory diagram illustrating a magnetic flux with individual inductors in a state of rotating a rotor in a counterclockwise direction with approximately 45 degrees from the state as shown in FIG. 15.
FIG. 18 is an explanatory diagram illustrating a magnetic flux with individual inductors in a state of rotating a rotor in a counterclockwise direction with approximately 60 degrees from the state as shown in FIG. 15.
FIG. 19 is an explanatory diagram illustrating a magnetic flux with individual inductors in a state of rotating a rotor in a counterclockwise direction with approximately 90 degrees from the state as shown in FIG. 15.
FIG. 20 is a cross sectional view showing an internal configuration of a conventional rotation angle detection device.
FIG. 21 is a brief plan view showing a sensing unit provided in FIG. 20 with an arrangement of a coil core.

### Best mode for carrying out the invention

A rotation angle detection device 1 according to the first embodiment regarding the present invention will be described in detail below, based on the drawings. Here in the present description, there is described a case where such the rotation angle detection device is attached to a steering shaft (referred to as a shaft Sh hereinafter) as a measurable rotation body for detecting a rotation angle of a steering wheel regarding a steering device of an automobile.

The rotation angle detection device 1 according to the first embodiment regarding the present invention comprises: a rotor 120 to be attached to a shaft (a measurable rotation body) Sh for rotating with the Sh to be measured a rotation angle, and comprising a magnet 110 that a magnetic flux density around the shaft is changed thereby in response to the rotation angle of the shaft Sh; a printed circuit board (a stator) 130 to be fixed as independent of the rotation of the shaft Sh; an inductor 150 (151 to 154) as a detection element to be fixed on the printed circuit board 130 for detecting a change in magnetic flux density in response to the rotation of the rotor 120 as integral with the shaft Sh to rotate; a pinion 140 to rotate as meshing with a pitch wheel 121 to be provided around the rotor, and comprising a magnet 145 at an inside thereof; an inductor 160 (161 to 164) to be fixed on the printed circuit board 130 for detecting a change in magnetic flux density in response to the rotation of the pinion 140; and a case 170 for packing the printed circuit board 130 that the rotor 120, the pinion 140, the inductors 150 and 160, an one chip microcomputer 135 for rotation angle detection, other electrical components and electronic components, are mounted thereon, and for configuring a part of the stator.

Moreover, the case 170 is made from a plastic, such as a polybutylene terephthalate (PBT) or the like, that the printed circuit board 130 is packed into such the case inside as a fixed state, and then the rotor 120 is packed thereinto as rotatable with the shaft Sh. Further, the case 170 is attached to such as a steering column, a combination switch, or the like, surrounding the shaft as independent of the rotation of the shaft Sh, using a bracket as not shown in the figure.

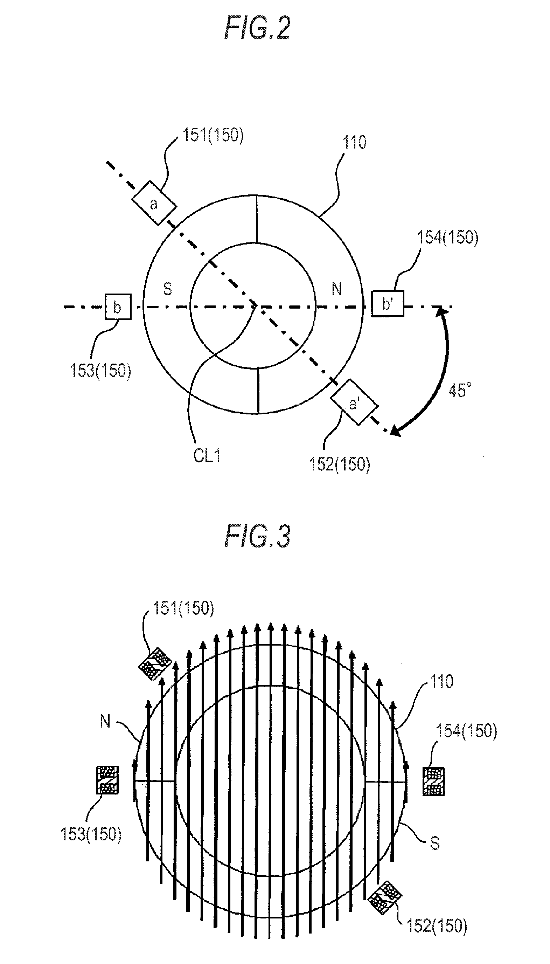

Still further, the inductors 151 and 152 as one pair, and the inductors 153 and 154 as another pair are attached to the printed circuit board 130, that have same detection characteristics respectively, for positioning on a similar plane with the magnet 110 of the rotor 120 at around a central axis line CL1 (refer to FIG. 2) of the shaft Sh. And then the inductors 151 and 152 as the one pair are provided on the printed circuit board for spacing a same distance from the central axis line CL1 in a diametrical direction with facing to each other on a vertical plane for the central axis line CL1 of the shaft Sh, meanwhile, the inductors 153 and 154 as the other pair are provided on the printed circuit board for spacing a same distance from the central axis line CL1 in a diametrical direction with facing to each other on a vertical plane for the central axis line CL1 of the shaft Sh as well. Still further, the inductor 151 (152) and the inductor 153 (154) of the individual pairs are arranged on the printed circuit board 130 for spacing with an angle of 45 degrees therebetween at a circumference of the central axis line of the shaft Sh respectively (refer to FIG. 2).

Still further, the individual inductors 150 comprises a configuration in that a coil comprised of a copper wire is rolled around a ferrite core, and then a so-called chip inductor is used therefor as commercially supplied, available to obtain easily, and possible for a surface mounting onto the printed circuit board 130.

Still further, the inductors 151 and 152 as the one pair are connected in series to therebetween, and the inductors 153 and 154 as the other pair are connected in series to therebetween as well.

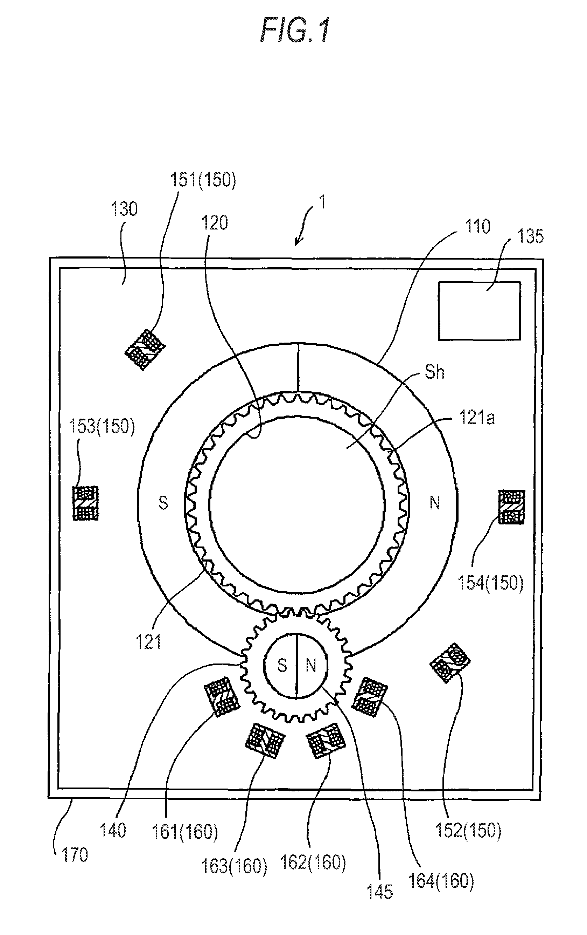

Still further, a through hole (not shown in FIG. 1) is provided in the printed circuit board 130 that the rotor 120 to rotate as integral with the shaft Sh passes completely therethrough, for the printed circuit board 130 so as not to interfere with the rotor 120 at the period of the rotation of the rotor 120.

Still further, the rotor 120 has an approximate cylindrical shape, it is made from a polyacetal (POM) for example, it is engaged with the shaft Sh using a serration or the like as not shown in the figure to be rotatable as integral with the shaft Sh, and that a gear 121a is provided all around a part of a peripheral surface thereof for forming the pitch wheel 121 at a peripheral part of the rotor. Still further, the magnet 110 is attached for rotating as integral with the rotation of the rotor 120, which has an annular shape of a further larger diameter than that of the pitch wheel 121 of the rotor 120, at a position to be on a similar plane with the individual inductors 150 on the printed circuit board 130 as the position shifted in a rotor axis line direction to such the pitch wheel 121.

Still further, the magnet 110 of annular shape to be attached to the rotor 120 surrounds concentrically around the shaft Sh, and also it is to be rotated as integral with the rotation of the rotor 120 as described above. Still further, a half portion of one side in a circumferential direction of the magnet 110 of annular shape (a right side half portion in FIG. 1) becomes to be a north pole, meanwhile, a half portion of another side in a circumferential direction (a left side half portion in FIG. 1) becomes to be a south pole. And then from the south pole to the north pole at an inside of the magnet 110, and from the north pole to the south pole at an outside of the magnet 110, magnet fluxes become to be generated in parallel to each other with a parallel anisotropy (refer to an arrow indicating a direction of the magnetic flux as shown in FIG. 3 through FIG. 7).

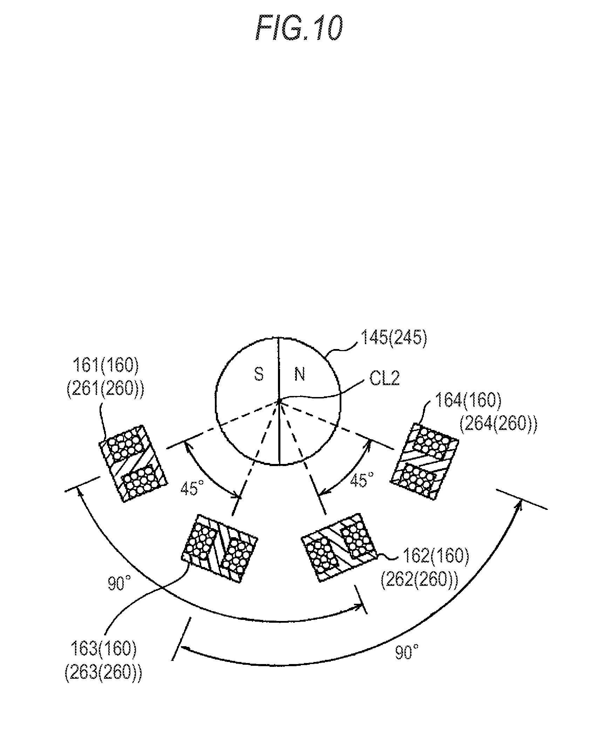

Still further, there is provided the pinion 140 to be meshed with the pitch wheel 121 at the outer circumference of the rotor 120 and then to rotate together according to the rotation of the rotor 120, on the printed circuit board 130. Here, such the pinion 140 is made from the polyacetal (POM) for example. Still further, there is provided the small magnet 145 of discotic shape at an inner side of the pinion 140, in which a half portion of one side becomes to be a north pole with a semicircular shape (a right side half portion in FIG. 1) and a half portion of another side becomes to be a south pole with a semicircular shape (a left side half portion in FIG. 1) from a view point of a planar view. Still further, the inductors 161 and 162 as one pair, and also the inductors 163 and 164 as another pair are arranged around the pinion 140 on the printed circuit board. Still further, regarding such the individual inductors 160, the inductors 161 and 162 as the one pair are arranged on the printed circuit board for having an angle of 90 degrees therebetween for a rotation center CL2 of the pinion 140, meanwhile, the inductors 163 and 164 as the other pair are arranged thereon for having an angle of 90 degrees therebetween for the rotation center CL2 of the pinion 140. Still further, the inductor 161 (162) of the one pair and the inductor 163 (164) of the other pair are arranged on the printed circuit board for having an angle of 45 degrees therebetween for the rotation center CL2 of the pinion 140 respectively, as shown in FIG. 10. Still further, the inductors 161 and 162 as the one pair are connected in parallel to therebetween, and the inductors 163 and 164 as the other pair are connected in parallel to therebetween as well.

Furthermore, regarding the individual inductors 160, there is used the so-called chip inductor therefor as commercially supplied, available to obtain easily, and possible for the surface mounting onto the printed circuit board, as well as the individual inductors 150 to be arranged around the magnet 110 to be rotated as integral with the rotor 120 as described above.

Next, a detection method for a rotation angle of a shaft Sh using the rotation angle detection device 1 comprising such the configuration will be described in detail below. Here, a change in magnetic flux around the magnet 110 at the time of a rotation of the rotor 120 and of the magnet 110 according to a rotation of the shaft Sh isexemplary indicated by arrows in FIG. 3 through FIG. 7.

FIG. 3 shows a state in which a borderline between anorth pole and a south pole is positioned in the most vicinity of the inductors 153 and 154 as another pair. According to such the rotation angle of the shaft Sh (the rotor 120), the direction of the magnetic flux faces to the vertical direction in the figure, and it becomes clear that the magnetic flux crosses the inductors 151 and 152 as the one pair with the angle of approximately 45 degrees, meanwhile, the magnetic flux does not cross at all the inductors 153 and 154 as the other pair. And then the magnetic flux density of the magnetic flux crossing the inductors 153 and 154 as the other pair becomes zero (the minimum), meanwhile, the magnetic flux density of the magnetic flux crossing the inductors 151 and 152 as the one pair becomes a medium degree.

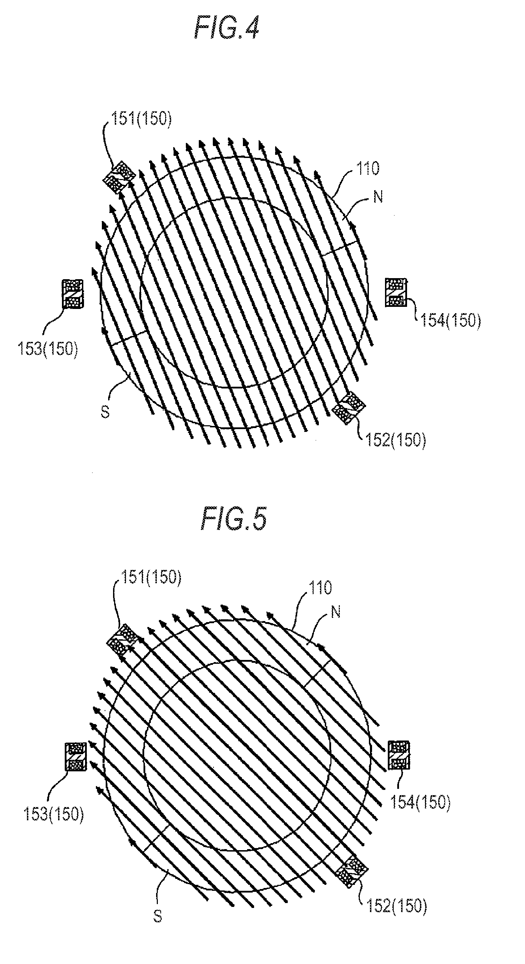

FIG. 4 shows a state in which the shaft Sh (the rotor 120) is rotated slightly in a counterclockwise direction in the figure from the state as shown in FIG. 3, for the borderline between the north pole and the south pole to be positioned in a counterclockwise direction with slight distance from the inductors 153 and 154 as the other pair. According to such the rotation angle of the shaft Sh (the rotor 120), it becomes clear that the direction of the magnetic flux faces upward to the left as close to the vertical direction in the figure, the magnetic flux crosses the inductors 151 and 152 as the one pair with an angle of approximately 60 degrees, and the magnetic flux crosses the inductors 153 and 154 as the other pair with an angle of approximately 30 degrees.

FIG. 5 shows a state in which the shaft Sh (the rotor 120) is further rotated slightly in the counterclockwise direction in the figure from the state as shown in FIG. 4, for the borderline between the north pole and the south pole of the magnet 110 to be positioned in a counterclockwise direction with distance as an angle of approximately 45 degrees from the inductors 153 and 154 as the other pair. According to such the rotation angle of the shaft Sh (the rotor 120), it becomes clear that the direction of the magnetic flux faces upward to the left in the figure, the magnetic flux crosses the inductors 151 and 152 as the one pair in a vertical direction, meanwhile, the magnetic flux crosses the inductors 153 and 154 as the other pair with an angle of approximately 45 degrees. Moreover, the magnetic flux density of the magnetic flux crossing the inductors 151 and 152 as the one pair becomes the maximum, on the contrary, the magnetic flux density of the magnetic flux crossing inductors 153 and 154 as the other pair becomes a medium degree.

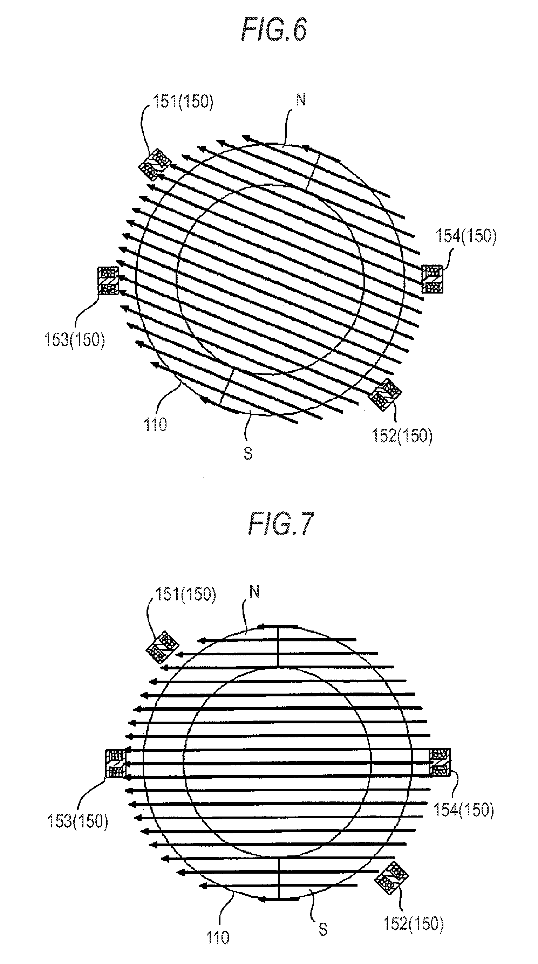

FIG. 6 shows a state in which the shaft Sh (the rotor 120) is further rotated slightly in the counterclockwise direction in the figure from the state as shown in FIG. 5, for the borderline between the north pole and the south pole of the magnet 110 to be positioned in a counterclockwise direction with distance as an angle of approximately 60 degrees from the inductors 153 and 154 as the other pair. According to such the rotation angle of the shaft Sh (the rotor 120), it becomes clear that the direction of the magnetic flux faces upward to the left as close to the horizontal direction in the figure, the magnetic flux crosses the inductors 151 and 152 as the one pair with an angle of approximately 30 degrees, and the magnetic flux crosses the inductors 153 and 154 as the other pair with the angle of approximately 30 degrees as well.

FIG. 7 shows a state in which the shaft Sh (the rotor 120) is further rotated slightly in the counterclockwise direction in the figure from the state as shown in FIG. 6, for the borderline between the north pole and the south pole of the magnet 110 to be positioned in a counterclockwise direction with distance as an angle of approximately 90 degrees from the inductors 153 and 154 as the other pair. According to such the rotation angle of the shaft Sh (the rotor 120), it becomes clear that the direction of the magnetic flux faces to the left for the horizontal direction in the figure, the magnetic flux crosses the inductors 151 and 152 as the one pair with an angle of approximately 45 degrees, meanwhile, the magnetic flux crosses the inductors 153 and 154 as the other pair in a vertical direction. Moreover, the magnetic flux density of the magnetic flux crossing the inductors 153 and 154 as the other pair becomes the maximum, on the contrary, the magnetic flux density of the magnetic flux crossing the inductors 151 and 152 as the one pair becomes a medium degree.

As it is obvious according to the above description, the direction and the magnitude of the magnetic flux density of the magnetic flux to cross the inductors 151 and 152 as the one pair and the inductors 153 and 154 as the other pair become to be changed with the cycle of 360 degrees according to the rotation of the shaft Sh (the rotor 120) respectively. And then a signal processing is to be performed on such the change in magnetic flux density using the one chip microcomputer 135 on the printed circuit board to be connected thereto via the inductors 151 and 152 as the one pair and via the inductors 153 and 154 as the other pair. Regarding such the signal processing, an output signal A as a total of the inductance for the inductors 151 and 152 as the one pair becomes obtained, and an output signal B as a total of the inductance for the inductors 153 and 154 as the other pair becomes obtained as well. Moreover, a cycle of the inductance detected from the inductors 151 and 152 or the inductors 153 and 154 becomes to be as 180 degrees.

Further, it becomes able to compensate and then absorb a shift of the output for the individual inductors due to a backlash between the printed circuit board 130 comprising the stator and rotor 120, and also it becomes able to enhance an accuracy of the inductance output from the individual pairs of the inductors 150 as high as exactly corresponding to the rotation angle of the shaft Sh, by summing the inductance outputs of the one pair of the inductors 151 and 152 as a phase of 180 degrees shifted therebetween, and by summing the inductance outputs of the other pair of the inductors 153 and 154 as the phase of 180 degrees shifted therebetween as well, because the inductors 151 and 152 as the one pair are arranged on the printed circuit board 130 to be symmetrical therebetween in a diametrical direction with respect to the central axis line CL1 of the shaft Sh, and because the inductors 153 and 154 as the other pair are also arranged on the printed circuit board 130 to be symmetrical therebetween in a diametrical direction with respect to the central axis line CL1 of the shaft Sh.

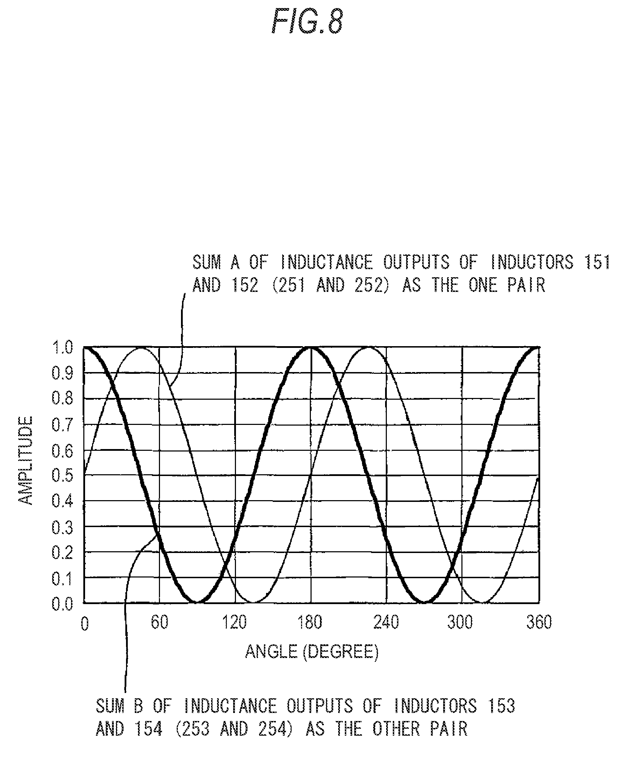

Such the output signal for the inductance of the individual pairs of the individual inductors 150 is shown in FIG. 8 as an output characteristic diagram. As it is obvious according to the figure, the total output signal A for the individual inductance of the inductors 151 and 152 as the one pair becomes to show a sine curve as a sum of the inductance of the individual inductors 151 and 152, and the total output signal B for the individual inductance of the inductors 153 and 154 as the other pair also becomes to show a sine curve as shifted therefrom with a cycle of 45 degrees.

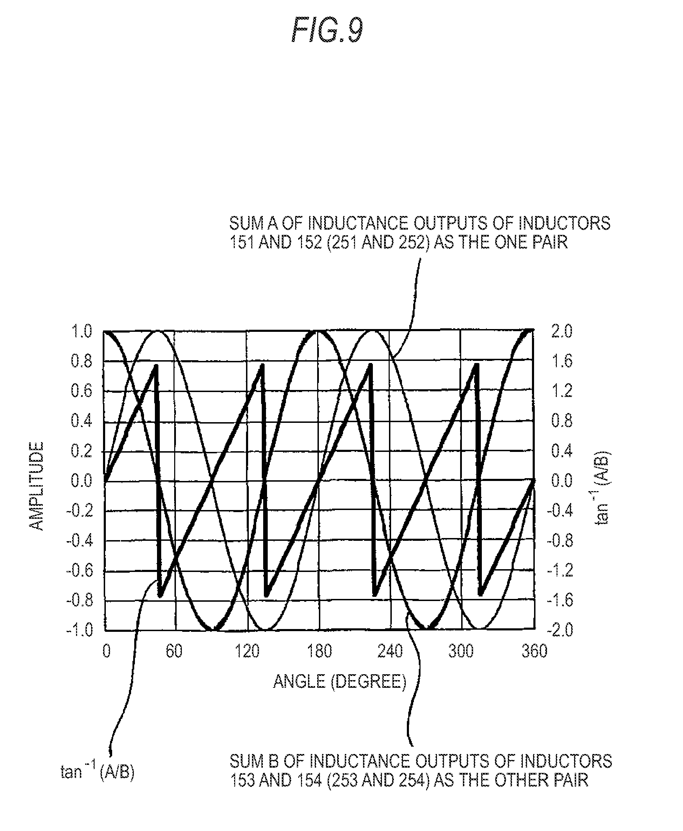

Moreover, an output of sawtooth waveform is obtained as shown in FIG. 9, by calculating a value of tan⁻¹(A/B) using the total output signals A and B for the inductance of the individual pairs obtained in such the way. Thus, in the case of the present embodiment, it becomes able to obtain an inductance output of the inductor 150 with a cycle of 90 degrees thereby corresponding to the rotation angle of the shaft Sh, that is to say, the rotor 120.

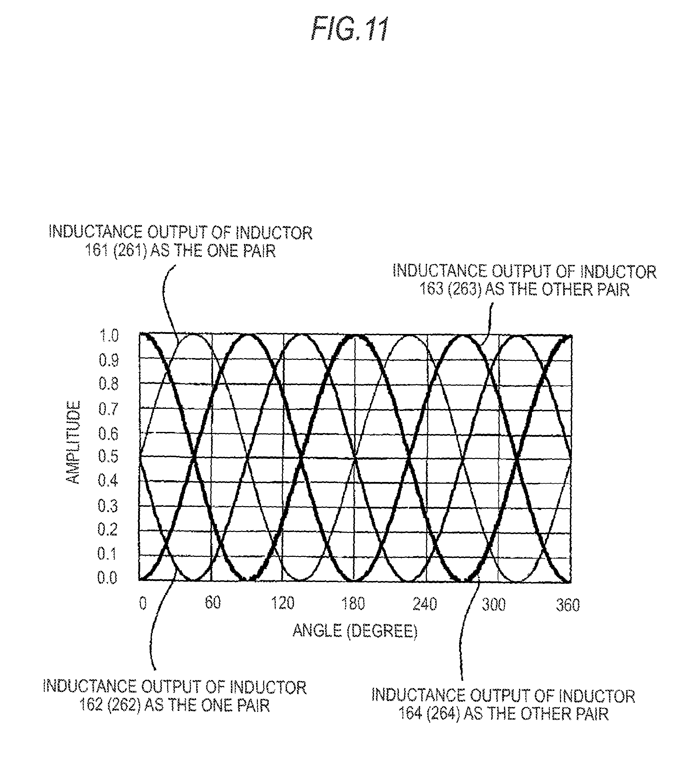

While, the inductors 160 measure a rotation angle of the pinion 140 to rotate corresponding to the pitch wheel 121, that are arranged around the magnet 145 provided in the pinion 140 and around the pinion 140 as shown in FIG. 1. That is to say, the individual inductors 160 detects individual inductance corresponding to the rotation of the pinion 140 according to the theory as similar to the above description. Here, in such the case, the inductors 161 and 162 as the one pair are spaced therebetween as 90 degrees in the circumferential direction to the rotation center CL2 of the pinion 140 as shown in FIG. 10, as different from the inductor 150 provided around the rotor as described above. And then the inductance outputs are shifted in phase therebetween as 90 degrees regarding the inductors 161 and 162 as the one pair, as shown in FIG. 11. Moreover, the inductance outputs regarding the inductors 163 and 164 as the other pair are also shifted as 90 degrees in phase therebetween as shown in FIG. 11, because the inductors 163 and 164 as the other pair are spaced therebetween as 90 degrees in a circumferential direction to the rotation center CL2 of the pinion 140 as well. Further, the inductance output of the inductor 161 (162) of the one pair and the inductance output of the inductors 163 (164) of the other pair are shifted in phase as 45 degrees therebetween respectively, because the inductor 161 (162) of the one pair and the inductor 163 (164) of the other pair are spaced therebetween as 45 degrees in a circumferential direction for the rotation center CL2 of the pinion 140 respectively.

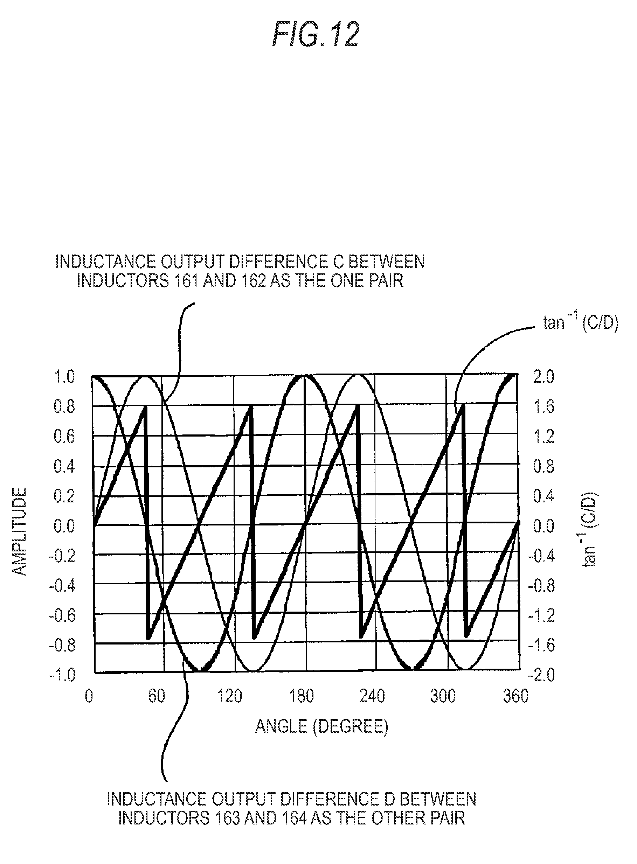

Here, the inductance output difference C between the inductors 161 and 162 as the one pair is obtained, and the inductance output difference D between the inductors 163 and 164 as the other pair is obtained as well, as shown in FIG. 12. And then an output of sawtooth waveform becomes to be obtained as shown in FIG. 12 by calculating a value of tan⁻¹(C/D). Moreover, the number of rotation of the shaft Sh, that is to say, the rotor, for example within a large angle range of between -900 degrees and +900 degrees is to be calculated primarily using a memory table in a microcomputer inside, with using a combination of the output of sawtooth waveform as shown in FIG. 9 and the output of sawtooth waveform as shown in FIG. 12. Further, a corresponding rotation angle in an angle range of between 0 degree and +360 degrees within such the rotation number range is determined using the sine curve as shown in FIG. 8. And then at the final step, an absolute rotation angle within the angle range of between -900 degrees and +900 degrees is calculated in the microcomputer inside. Here, regarding the calculation of such the absolute rotation angle, practically a gear ratio between the pitch wheel 121 and the pinion 140 according to the above described embodiment is changed properly into a gear ratio to be suitable for an angle calculation and then it is calculated thereon.

As described above, according to the conventional rotation angle detection device comprised of the combination of the sensing unit and the coil, it becomes to bring on a high cost of production therefor, because the coil, the coil core, the coil core holder and the rotor shield are included as the component parts thereof and such the component parts are special order items, and then because a complicated coil wiring processing becomes required due to too many number of components. Moreover, it becomes hard to design the thickness of the rotation angle detection device to be thin and the rotation angle detection device itself to be small sized, because it is required to arrange the coil and the coil core via the coil core holder for the rotor shield to be sandwiched by the coil and the coil core with a predetermined distance therebetween.

However, according to the rotation angle detection device 1 regarding the present invention, it becomes able to use a detection element comprised of a small sized coil to be commercially supplied as so-called chip inductor, because a change in magnetic flux density due to the magnet 110 to be rotated with the rotor 120 is designed to be detected, and then it becomes possible for a rotation angle detection device to be small sized. Moreover, it becomes unnecessary to perform the wiring processing, and then it becomes able to achieve a lower cost therefor, because it is able to surface mount the commercially supplied coil as the detection element which is the so-called chip inductor onto such as a stator comprised of a printed circuit board. Further, it is not required to use a coil core holder as that for the conventional rotation angle detection device, because it is not necessary to arrange the coils for sandwiching the rotor shield. Thus, it is able to manufacture a rotation angle detection device to be thinner for such the thickness thereof, and then it becomes possible for the rotation angle detection device itself to be small sized.

Next, a rotation angle detection device according to the second embodiment regarding the present invention will be described in detail below, based on the drawings. Here, regarding a configuration as similar to that for the rotation angle detection device according to the above described first embodiment, a detailed description is omitted with using a symbol corresponding thereto.

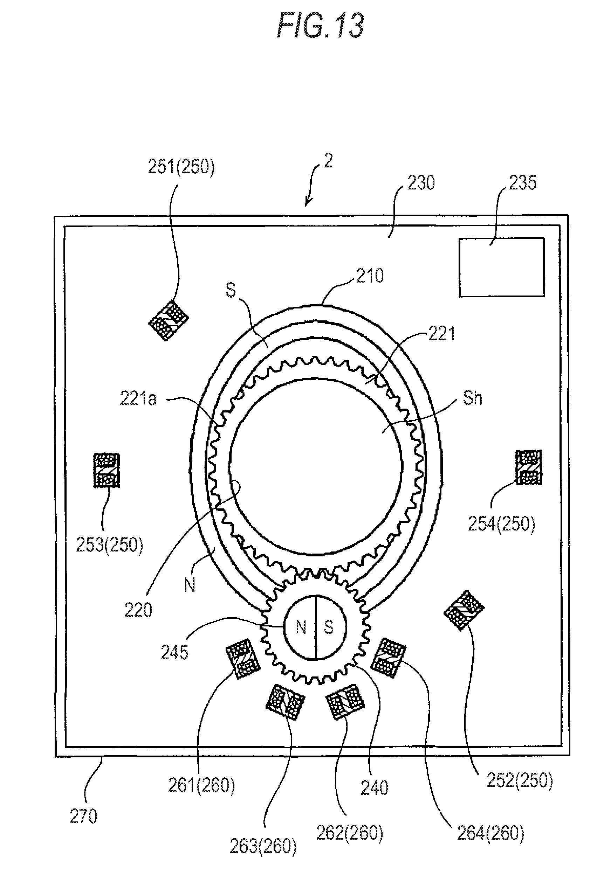

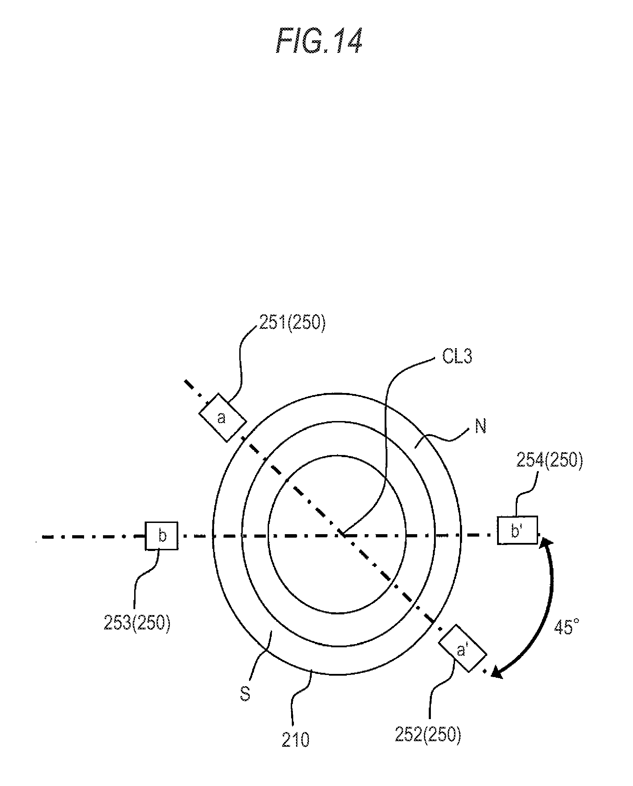

As shown in FIG. 13 and FIG. 14, a rotation angle detection device 2 according to the second embodiment regarding the present invention comprises: a rotor 220 attached to a shaft (a measurable rotation body) Sh for rotating with the Sh to be measured a rotation angle, and comprising a magnet 210 that a magnetic flux density around the shaft is changed thereby in response to the rotation angle of the shaft Sh; a printed circuit board (a stator) 230 fixed as independent of the rotation of the shaft Sh; an inductor 250 (251 to 254) as a detection element fixed on the printed circuit board 230 for detecting a change in magnetic flux density in response to the rotation of the rotor 220 as integral with the shaft Sh; a pinion 240 to rotate as meshing with a pitch wheel 221 provided around the rotor, and comprising a magnet 245 at an inner side thereof; an inductor 260 (261 to 264) fixed on the printed circuit board 230 for detecting a change in magnetic flux density in response to the rotation of the pinion 240; and a case 270 for packing the printed circuit board 230 that the rotor 220, the pinion 240, the inductors 250 and 260, an one chip microcomputer 235 for rotation angle detection, other electrical components and electronic components, are mounted thereon, and for configuring a part of the stator.

Moreover, the case 270 is made from a plastic, such as the polybutylene terephthalate (PBT) or the like, that the printed circuit board 230 is packed into such the case inside as a fixed state, and then the rotor 220 is packed thereinto asrotatablewith the shaft Sh. Further, the case 270 is attached to such as a steering column, a combination switch, or the like, surrounding the shaft as independent of the rotation of the shaft Sh, using a bracket as not shown in the figure.

Still further, the inductors 251 and 252 as one pair having same detection characteristics, and the inductors 253 and 254 as another pair having same detection characteristics as well, are attached to the printed circuit board 230. And then the inductors 251 and 252 as the one pair are fixed on the printed circuit board 230 for becoming symmetrical therebetween with respect to a central axis line CL3 of the shaft Sh (refer to FIG. 14), meanwhile, the inductors 253 and 254 as the other pair are fixed on the printed circuit board 230 for becoming symmetrical therebetween with respect to the central axis line CL3 of the shaft Sh as well. Still further, the inductor 251 (252) of the one pair and the inductor 253 (254) of the other pair are arranged for having an angle of 45 degrees therebetween at a circumference of the axis line of the shaft Sh respectively. Still further, the individual inductors 250 are attached to the printed circuit board 230 for positioning on a similar plane with the magnet 210 of the rotor 220.

Still further, the individual inductors 251 and 252 (253 and 254) comprises a configuration wherein a coil is provided of which a copper wire is rolled around a ferrite core, and then the so-called chip inductor is used therefor as commercially supplied, available to obtain easily, and possible for a surface mounting onto the printed circuit board 230.

Still further, the inductors 251 and 252 as the one pair are connected in series to therebetween, and the inductors 253 and 254 as the other pair are connected in series to therebetween as well.

Still further, a through hole (not shown in FIG. 13) is provided in the printed circuit board 230 that the rotor 220 to rotate as integral with the shaft Sh passes completely therethrough, for the printed circuit board 230 so as not to interfere with the rotor 220 at the period of the rotation of the rotor 220.

Still further, the rotor 220 has an approximate cylindrical shape, it is made from the polyacetal (POM) for example, it is engaged with the shaft Sh using a serration or the like as not shown in the figure to be rotatable as integral with the shaft Sh, and that a gear 221a is provided all around a part of a peripheral surface of the rotor for forming the pitch wheel 221 at a peripheral part of the rotor. Still further, the magnet 210 is attached for rotating as integral with the rotation of the rotor 220, which has an ellipsoidal annular shape of a further larger diameter than that of the pitch wheel 221 of the rotor 220, at a position to be on a similar plane with the inductor 260 on the printed circuit board 230 and the position shifted in a rotor axis line direction to such the pitch wheel 221.

Still further, the magnet 210 of ellipsoidal annular shape to be attached to the rotor 220 surrounds concentrically around the shaft Sh, and also it is to be rotated as integral with the rotation of the rotor 220 as described above. Still further, a half portion at an outer side in a width direction of such the magnet 210 of ellipsoidal annular shape becomes to be a north pole, meanwhile, a half portion at an inner side in the width direction becomes to be a south pole. And then from a whole of the peripheral surface of the magnet 210, magnet fluxes become to be generated in a radiation direction with a radial anisotropy.

Still further, there is provided the pinion 240 to be meshed with the pitch wheel 221 at the outer circumference of the rotor 220 and then to rotate at the same time therewith according to the rotation of the rotor 220, on the printed circuit board 230 as described above. Still further, there is provided the small magnet 245 of discotic shape at an inner side of the pinion 240, in which a half portion of one side becomes to be a north pole with a semicircular shape and a half portion of another side becomes to be a south pole with a semicircular shape from a view point of a planar view. Still further, the individual inductors 260 is arranged around the pinion 240 on the printed circuit board. More specifically, the individual inductors 260 comprises an arrangement configuration as shown in FIG. 10, wherein the inductors 261 and 262 as the one pair are arranged on the printed circuit board for having an angle of 90 degrees therebetween in a circumferential direction to a rotation center CL2 of the pinion 240, meanwhile, the inductors 263 and 264 as the other pair are arranged thereon for having an angle of 90 degrees therebetween in a circumferential direction to the rotation center CL2 of the pinion as well. Still further, the inductor 261 (262) of the one pair and the inductor 263 (264) of the other pair are arranged on the printed circuit board for having an angle of 45 degrees therebetween for the rotation center CL2 of the pinion 240 respectively. Still further, the inductors 261 and 262 as the one pair are connected in parallel to therebetween, and the inductors 263 and 264 as the other pair are connected in parallel to therebetween as well.

Furthermore, regarding the individual inductors 260, there is used the so-called chip inductor therefor as commercially supplied, available to obtain easily, and possible for the surface mounting onto the printed circuit board 230, as well as the individual inductors 250 to be arranged around the magnet 210 to rotate as integral with the rotor 220 as described above.

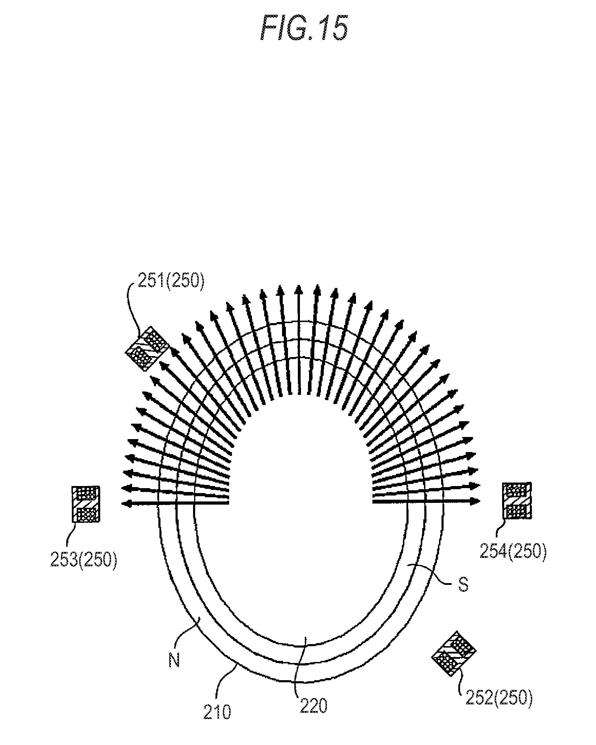

Next, a detection method for a rotation angle of a shaft Sh using the rotation angle detection device 2 comprising such the configuration will be described in detail below. In FIG. 15 through FIG. 19, a change in magnetic flux around the magnet 210 at the time of a rotation of the rotor 220 and the magnet 210 according to a rotation of the shaft Sh is exemplary indicated by arrows.

FIG. 15 shows a state in which a major axis of the magnet 210 is faced to a vertical direction in the figure and the inductors 253 and 254 as the other pair and the magnet 210 are distant therebetween. According to such the rotation angle of the shaft Sh (the rotor 220), it becomes clear that the magnetic flux crosses the inductors 251 and 252 as the one pair with the magnetic flux density of a medium degree, on the contrary, the magnetic flux density of the magnetic flux crossing the inductors 253 and 254 as the other pair becomes relatively small.

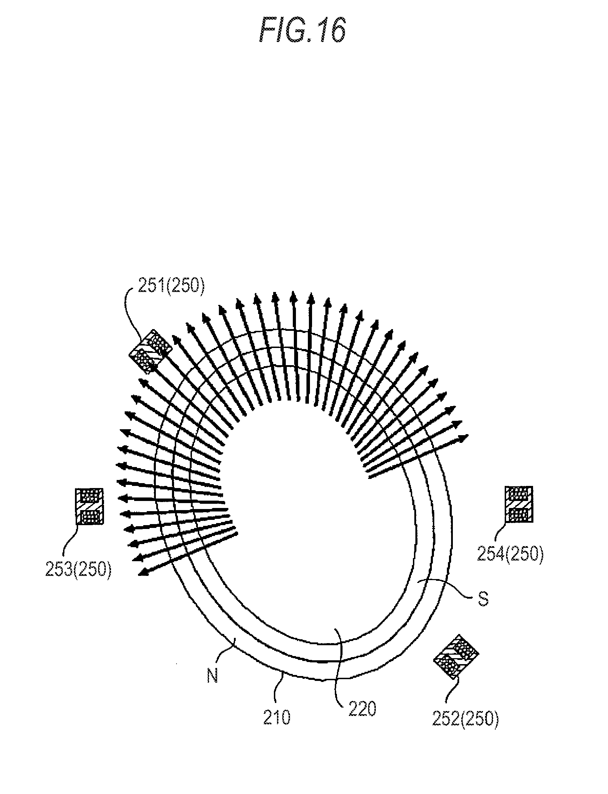

FIG. 16 shows a state in which the shaft Sh (the rotor 220) is slightly rotated in a counterclockwise direction in the figure from the state as shown in FIG. 15 and the major axis of the magnet 210 becomes quite close to the inductors 251 and 252 as the one pair. According to such the rotation angle of the shaft Sh (the rotor 220), it becomes clear that the magnetic flux density of the magnetic flux crossing the inductors 251 and 252 as the one pair becomes quite large, meanwhile, the magnetic flux density of the magnetic flux crossing the inductors 253 and 254 as the other pair becomes slightly increased comparing to the minimum value as shown in FIG. 15.

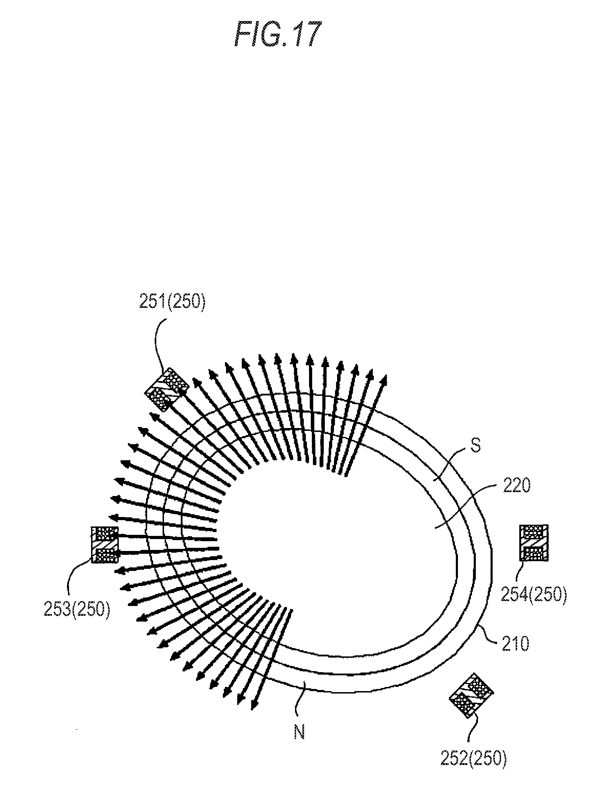

FIG. 17 shows a state in which the shaft Sh (the rotor 220) is further rotated slightly in a counterclockwise direction in the figure from the state as shown in FIG. 16 and the major axis of the magnet 210 becomes just fitted in the inductors 251 and 252 as the one pair. According to such the rotation angle of the shaft Sh (the rotor 220), it becomes clear that the magnetic flux density of the magnetic flux crossing the inductors 251 and 252 as the one pair becomes the maximum, meanwhile, the magnetic flux density of the magnetic flux crossing the inductors 253 and 254 as the other pair becomes a medium degree.

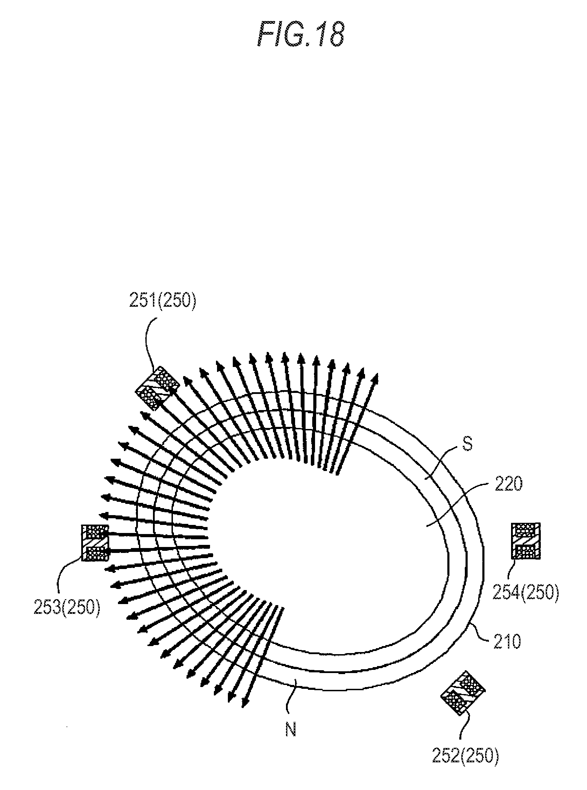

FIG. 18 shows a state in which the shaft Sh (the rotor 220) is further rotated slightly in a counterclockwise direction in the figure from the state as shown in FIG. 17 and the major axis of the magnet 210 is positioned almost in the middle between the one pair of the inductors 251 and 252 and the other pair of the inductors 253 and 254. According to such the rotation angle of the shaft Sh (the rotor 220), it becomes clear that the magnetic flux density of the magnetic flux crossing the inductors 251 and 252 as the one pair and the inductors 253 and 254 as the other pair becomes a degree as slightly smaller than the maximum value.

FIG. 19 shows a state in which the shaft Sh (the rotor 220) is further rotated slightly in a counterclockwise direction in the figure from the state as shown in FIG. 18 and the major axis of the magnet 210 becomes faced to the horizontal direction in the figure. According to such the rotation angle of the shaft Sh (the rotor 220), it becomes clear that the magnetic flux density of the magnetic flux crossing the inductors 253 and 254 as the other pair becomes the maximum, meanwhile, the magnetic flux density of the magnetic flux crossing the inductors 251 and 252 as the one pair becomes a medium degree.

As it is obvious according to the above description, the magnetic flux density of the magnetic flux to cross the individual inductors 251 and 252 as the one pair and the individual inductors 253 and 254 as the other pair becomes to be changed with the cycle of 360 degrees according to the rotation of the shaft Sh (the rotor 220) respectively. And then a signal processing is to be performed on such the change in magnetic flux density using the one chip microcomputer 235 on the circuit board to be connected to the individual inductors 251 and 252 as the one pair and to the individual inductors 253 and 254 as the other pair. Regarding such the signal processing, an output signal corresponding to each inductance for the inductors 251 and 252 as the one pair becomes to be obtained, and an output signal corresponding to each inductance for the inductors 253 and 254 as the other pair becomes to be obtained as well.

Here, the inductors 251 and 252 as the one pair are connected in series to therebetween, and the inductors 253 and 254 as the other pair are connected in series to therebetween as well.

Moreover, the inductors 251 and 252 as the one pair are arranged on the printed circuit board 230 for becoming symmetrical in a diametrical direction with respect to the central axis line of the shaft Sh, and the inductors 253 and 254 as the other pair are also arranged on the printed circuit board 230 for becoming symmetrical in a diametrical direction with respect to the central axis line of the shaft Sh. Hence, the inductance outputs of the inductors 251 and 252 as the one pair become shifted in a phase of 180 degrees therebetween, and the inductance outputs of the inductors 253 and 254 as the other pair become shifted in the phase of 180 degrees therebetween as well. Further, it becomes able to compensate and then absorb a shift of an output from the individual inductors 250 due to a backlash between the printed circuit board 230 to comprise the stator and the rotor 220, and also it becomes able to enhance an accuracy of the inductance output from the individual inductors 250 as high as exactly corresponding to the rotation angle of the shaft Sh, by summing the outputs of the inductors 251 and 252 as the one pair as such the phase of 180 degrees shifted therebetween, and by summing the outputs of the inductors 253 and 254 as the other pair as well.

Furthermore, the inductors 251 (252) of the one pair and the inductors 253 (254) of the other pair are arranged around the central axis line of the shaft Sh with shifting the angle of 45 degrees therebetween respectively.

As the result thereof, an inductance output A of the inductors 251 and 252 as the one pair becomes to show a sine curve as a sum of the inductance of the individual inductors 251 and 252 as shown in FIG. 8, and an inductance output B of the inductors 253 and 254 as the other pair also becomes to show a sine curve as shifted therefrom with a cycle of 45 degrees.

Moreover, it becomes able to obtain an output of sawtooth waveform as shown in FIG. 9, by calculating a value of tan⁻¹(A/B) using the inductance outputs for the individual pairs obtained in such the way. Thus, in the case of the present embodiment, it becomes able to obtain an inductance output of the inductor with a cycle of 90 degrees thereby corresponding to the rotation angle of the shaft Sh, that is to say, the rotor 220.

While, the inductors 260 measure a rotation angle of the pinion 240 to rotate corresponding to the pitch wheel 221, that are arranged around the magnet 245 provided in the pinion 240 and around the pinion 240 as shown in FIG. 13. That is to say, the individual inductors 260 evaluates an inductance output difference C between the inductors 261 and 262 as the one pair, and evaluates an inductance output difference D between the inductors 263 and 264 as the other pair, corresponding to the rotation of the pinion 240 according to the theory as similar to that for the pinion 140, the magnet 145, and the inductors 160 to be arranged around the pinion 140 according to the first embodiment. Here, in such the case as different from that for the above mentioned inductors provided around the rotor, the inductors 261 and 262 as the one pair are spaced therebetween as 90 degrees in the circumferential direction to the rotation center CL2 of the pinion 240, and also the inductors 263 and 264 as the other pair are spaced therebetween as 90 degrees in the circumferential direction to the rotation center CL2 of the pinion 240 as shown in FIG. 10. Hence, the output of the individual inductors 261 and 262 as the one pair is shifted therebetween in phase as 90 degrees, and the inductance outputs of the inductors 263 and 264 as the other pair are also shifted therebetween as 90 degrees in phase, as shown in FIG. 11. Moreover, the inductor 261 (262) of the one pair and the inductor 263 (264) of the other pair are shifted therebetween in phase as 45 degrees respectively, because the inductor 261 (262) of the one pair and the inductor 263 (264) of the other pair are arranged with spacing therebetween as 45 degrees in the circumferential direction for the central axis line of the pinion 240 respectively. Here, as shown in FIG. 12, it is able to obtain an inductance output difference C between the inductors 261 and 262 as the one pair, and it is able to obtain an inductance output difference D between the inductors 263 and 264 as the other pair as well. And then an output of sawtooth waveform becomes obtained as shown in FIG. 12 by calculating a value of tan⁻¹(C/D). Moreover, the number of rotation of the shaft Sh, that is to say, the rotor, for example within a large angle range of between -900 degrees and +900 degrees is calculated primarily using a memory table in an one chip microcomputer inside, with using a combination of the output of sawtooth waveform as shown in FIG. 9 and the output of sawtooth waveform as shown in FIG. 12. Further, a corresponding rotation angle in an angle range of between 0 degree and +360 degrees within such the rotation number range is determined using the sine curve as shown in FIG. 8. And then at the final step, an absolute rotation angle within the angle range of between -900 degrees and +900 degrees is calculated in the one chip microcomputer inside. Here, regarding the calculation of such the absolute rotation angle, practically a gear ratio between the pitch wheel 221 and the pinion 240 according to the above described embodiment is changed properly into a gear ratio to be suitable for an angle calculation, and then it is calculated thereon.

Regarding the assembly of the rotation angle detection devices 1 and 2 according to each of the embodiments as described above, it is able to assemble simply the whole of the rotation angle detection device due to few number of the parts count thereof as mentioned above. That is to say, it is not necessary to arrange a coil and a coil core on a printed circuit board so as to be faced therebetween with sandwiching a sensing unit thereby as equidistant from the sensing unit using a coil core holder as in the same way of that for the conventional rotation angle detection device.

Thus, it becomes unnecessary thereby to use a coil core holder for attaching a coil and a coil core to a printed circuit board in such the way, and then it becomes able to manufacture a rotation angle detection device itself to be thinner, and to achieve the rotation angle detection device 2 to be smaller in size. Moreover, it is not necessary to attach a coil and a coil core in such the complicated positional relationship regarding the relationship with the sensing unit. That is to say, to mount a chip inductor onto a printed circuit board is all that is needed, as it is commercially supplied, available to obtain easily, and possible for a surface mounting onto the printed circuit board 230. Thus, it becomes unnecessary to process for complicated wiring between a circuit pattern and a coil on a printed circuit board in the conventional way, and then it becomes able to design for reducing a man-hour on assembly and to suppress a manufacturing cost regarding a rotation angle detection device.

Moreover, in the rotation angle detection device according to the second embodiment, the inner side is the south pole and the outer side is the north pole regarding the magnet of ellipsoidal annular shape, however, it is needless to say that an inner side may be a north pole and an outer side may be a south pole regarding a magnet, as vice versa thereto.

Further, as a modified example of the above described second embodiment, with using a magnet having an ellipsoidal annular shape in which a half portion in a thickness direction thereof is a north pole and another half portion thereof is a south pole, it may be possible to obtain functions and advantages as similar to that according to the above described second embodiment.

Still further, according to the above described each of the embodiments, the inductors as the pair are prepared with two pairs, and then such the inductors are arranged onto the printed circuit board for positioning around the magnet attached thereby as integral with the rotor. However, the present invention is not limited to the number of pairs, and inductors as the pair may be arranged with one pair, or three pairs or more thereof may be arranged as well.

Still further, according to the above described each of the embodiments, the individual inductors is arranged on the printed circuit board to be on the similar plane with the magnet, however, it is not required to arrange inductors on a similar plane with a magnet if it is possible for the individual inductors to detect correctly a change in magnetic flux density due to the rotation of the magnet.

Still further, regarding the rotation number of the shaft Sh, there is used the combination of the magnet and the inductor according to each of the present embodiments, however, the present invention is not limited thereto, and it may be also possible to consider to use any one of combinations of such as a magnet and a Hall element, a magnet and a magnetic resonance (MR) element, a magnet and a geneva gear, or the like.

Still further, the material type of the individual members embodied in the above described each of the embodiments is not limited thereto, and it is needless to say that it may be available to use any materials if it can bring out the functions of the present invention.

Still further, the rotation angle detection device according to the present invention is suitable in particular to a detection of rotation angle of a steering device for vehicle to be required a high detection accuracy of rotation angle and cannot help but be allowed a certain degree of component tolerance or a backlash under an assembled state for improving an assembly easiness thereof as well. Furthermore, the rotation angle detection device according to the present invention is applicable to any devices if it is required to evaluate a relative rotation angle of between rotation axes and/or a rotating torque, for such as a robot arm to rotate with vibrating, or the like.

## Claims

1. A rotation angle detection device comprising:
a rotor attached to a measurable rotation body for rotating with the measurable rotation body to be measured a rotation angle, and comprising a magnet that a magnetic flux density around the measurable rotation body is changed thereby in response to the rotation angle of the measurable rotation body;
a stator to be attached as independent of the rotation of the measurable rotation body;
a detection element fixed on the stator for detecting a change in magnetic flux density due to the magnet in response to the rotation of the measurable rotation body; and
a case for packing the rotor, the stator and the detection element,
wherein the rotation angle of the measurable rotation body is detected in response to a detection signal from the detection element according to the rotation of the measurable rotation body.

2. The rotation angle detection device according to claim 1, wherein the magnet has an annular shape to surround the measurable rotation body, a half portion of one side in a circumferential direction of the magnet of annular shape is a north pole, and a half portion of another side in the circumferential direction is a south pole.

3. The rotation angle detection device according to claim 1, wherein the magnet has an ellipsoidal annular shape, an inner side of the magnet is a north pole and an outer side is a south pole, or the inner side is the south pole and the outer side is the north pole.

4. The rotation angle detection device according to claim 1, wherein the magnet has an ellipsoidal annular shape, a half portion in a thickness direction of the magnet is a north pole and another half portion thereof is a south pole.

5. The rotation angle detection device according to any one of claims 1 to 4, wherein the detection element comprises the detection elements of one pair having a same detection characteristics, and the detection elements of the one pair are arranged at the stator so as to be symmetrical therebetween with respect to a central axis line of the measurable rotation body.

6. The rotation angle detection device according to claim 5, wherein the pair of detection elements is arranged as not less than two pairs at different positions in the circumferential direction relative to the axis line of the measurable rotation body.
